(19) Europäisches Patentamt
European Patent Office
Office européen des brevets

(11) **EP 3 130 946 A1**

(12) **EUROPEAN PATENT APPLICATION**
published in accordance with Art. 153(4) EPC

(43) Date of publication:
**15.02.2017 Bulletin 2017/07**

(51) Int Cl.:
***G02B 1/118*** (2015.01)

(21) Application number: **15838037.8**

(86) International application number:
**PCT/JP2015/074103**

(22) Date of filing: **26.08.2015**

(87) International publication number:
**WO 2016/035650 (10.03.2016 Gazette 2016/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **02.09.2014 JP 2014177903**

(71) Applicant: **Scivax Corporation**
**Kawasaki-shi, Kanagawa 212-0032 (JP)**

(72) Inventors:
• **NAWATA Akifumi**
**Kawasaki-shi**
**Kanagawa 212-0032 (JP)**
• **TANAKA Satoru**
**Kawasaki-shi**
**Kanagawa 212-0032 (JP)**

(74) Representative: **Gille Hrabal**
**Brucknerstrasse 20**
**40593 Düsseldorf (DE)**

(54) **OPTICAL MEMBER AND METHOD FOR MANUFACTURING SAME**

(57) Provided is an optical component capable of sufficiently suppressing a reflection even if the incident angle of a light source changes with a line direction being as a rotation axis in a reflection suppressing structure in a line-and-space shape. The optical component includes a base having a function as an optical component, and a reflection suppressing structure in a line-and-space shape formed on a surface of the base, and including a plurality of sequential concavities and convexities defining a convex shape in a cross-sectional view. When a position of a mid-point of a bottom side of the convex shape is an origin, the bottom side is y-axis, a height direction relative to the bottom side is x-axis, a width of the bottom side of the convex shape is P, a height of the convex shape is H, r = 0.1, and an arbitrary position on the convex shape is (x, y), the convex shape satisfies a following formula (1):

$$-\frac{P}{2}\left(\frac{1-\sqrt{r}}{H}x - 1\right)^2 \leqq y \leqq \frac{P}{2}\left(\frac{1-\sqrt{r}}{H}x - 1\right)^2$$

Formula (1)

FIG. 1

**Description**

TECHNICAL FIELD

The present disclosure relates to an optical component that suppresses a reflection of light from a surface, and a method of manufacturing the same.

BACKGROUND ART

Transmissive optical components, such as a lens and a display that allow light to transmit therethrough, may reduce the visibility due to a reflection of light like solar light or illumination light at a boundary where air is in contact. Hence, according to conventional technologies, in order to suppress a reflection of light, moth-eye structures in a pillar shape or in a hall shape are formed on the surface of a base that has a function as an optical component (see, for example, Patent Document 1).

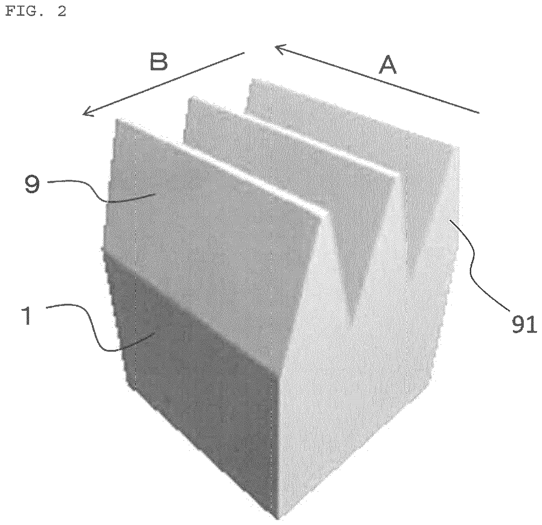

In addition, as illustrated in FIG. 2, a reflection suppressing structure 9 in a line-and-space shape that has a triangular convex shape 91 in a cross-sectional view is provided on the surface of a base 1 that has a function as an optical component (see, for example, Patent Document 2).

CITATION LIST

PATENT LITERATURES

Patent Document 1: JP 2014-51601 A
Patent Document 2: Japan Patent No. 3368225

SUMMARY OF INVENTION

TECHNICAL PROBLEM

According to the moth-eye structure disclosed in Patent Document 1, the process is difficult, and the rigidity is not so high. Conversely, the reflection suppressing structure 9 in a line-and-space shape and disclosed in Patent Document 2 is easy to process, and has a relatively high rigidity. When, however, the incident angle of a light source changes with an orthogonal direction to the line direction being as a rotation axis, the reflection can be still suppressed even if the incident angle slightly changes, but when the incident angle of the light source changes with the line direction being as a rotation axis, and when the incident angle becomes large, the reflection suppressing performance decreases.

Hence, an objective of the present disclosure is to provide an optical component which is capable of sufficiently suppressing a reflection of light even if the incident angle of a light source changes with a line direction being as a rotation axis in a reflection suppressing structure formed in a line-and-space shape.

SOLUTION TO PROBLEM

In order to accomplish the above objective, an optical component according to the present disclosure includes:

a base having a function as an optical component; and
a reflection suppressing structure in a line-and-space shape which is formed on a surface of the base, and which comprises a plurality of sequential concavities and convexities defining a convex shape in a cross-sectional view, in which, when a position of a mid-point of a bottom side of the convex shape is an origin, the bottom side is y-axis, a height direction relative to the bottom side is x-axis, a width of the bottom side of the convex shape is P, a height of the convex shape is H, r = 0.1, and an arbitrary position on the convex shape is (x, y), the convex shape satisfies a following formula (1):

$$-\frac{P}{2}\left(\frac{1-\sqrt{r}}{H}x-1\right)^2 \leqq y \leqq \frac{P}{2}\left(\frac{1-\sqrt{r}}{H}x-1\right)^2$$

Formula (1)

In this case, it is preferable that the above optical component should further include at least one buffer layer which is formed between the base and the reflection suppressing structure, and which is formed of a material that has a reflective index lower than a reflective index of the base but higher than a reflective index of a material for the reflection suppressing structure.

In addition, a method of manufacturing an optical component according to the present disclosure includes:

a base having a function as an optical component; and
a reflection suppressing structure in a line-and-space shape which is formed on a surface of the base, and which comprises a plurality of sequential concavities and convexities defining a convex shape in a cross-sectional view, in which, when a position of a mid-point of a bottom side of the convex shape is an origin, the bottom side is y-axis, a height direction relative to the bottom side is x-axis, a width of the bottom side of the convex shape is P, a height of the convex shape is H, r = 0.1, and an arbitrary position on the convex shape is (x, y), the method adjusts the convex shape so as to satisfy a following formula (1) :

$$-\frac{P}{2}\left(\frac{1-\sqrt{r}}{H}x-1\right)^2 \leqq y \leqq \frac{P}{2}\left(\frac{1-\sqrt{r}}{H}x-1\right)^2$$

Formula (1)

In this case, it is preferable that the above method should further include forming at least one buffer layer which is formed between the base and the reflection suppressing structure, and which is formed of a material that has a reflective index lower than a reflective index of the base but higher than a reflective index of a material for the reflection suppressing structure.

ADVANTAGEOUS EFFECTS OF INVENTION

The optical component according to the present disclosure is capable of sufficiently suppressing a reflection even if the incident angle of a light source changes with the line direction being as a rotation axis in a reflection suppressing structure in a line-and-space shape.

BRIEF DESCRIPTION OF DRAWINGS

FIG. 1 is a perspective view illustrating an optical component according to the present disclosure;
FIG. 2 is a perspective view illustrating an optical component according to a conventional technology;
FIGS. 3A, 3B are each a diagram for explaining a formula (A) ;
FIG. 4 is a diagram for explaining a formula (B);
FIG. 5 is a diagram for explaining a convex shape satisfying a formula (1);
FIG. 6 is a diagram for explaining the convex shape satisfying the formula (1);
FIG. 7A is a cross-sectional view for explaining a convex shape according to a first example;
FIGS. 8B, 8C are each a cross-sectional view for explaining convex shapes according to a first comparative example and a second comparative example;
FIG. 9 is a diagram illustrating an optical characteristic according to the first example;
FIG. 10 is a diagram illustrating an optical characteristic according to the first comparative example;

FIG. 11 is a diagram illustrating an optical characteristic according to the second comparative example;

FIG. 12 is a diagram illustrating an optical characteristic according to the first example;

FIG. 13 is a diagram illustrating an optical characteristic according to the first comparative example;

FIG. 14 is a diagram illustrating an optical characteristic according to the second comparative example;

FIG. 15 is a cross-sectional view illustrating an optical component according to the present disclosure and including a buffer layer; and

FIG. 16 is a schematic explanatory diagram illustrating a measuring method of a convex shape according to the present disclosure.

DESCRIPTION OF EMBODIMENTS

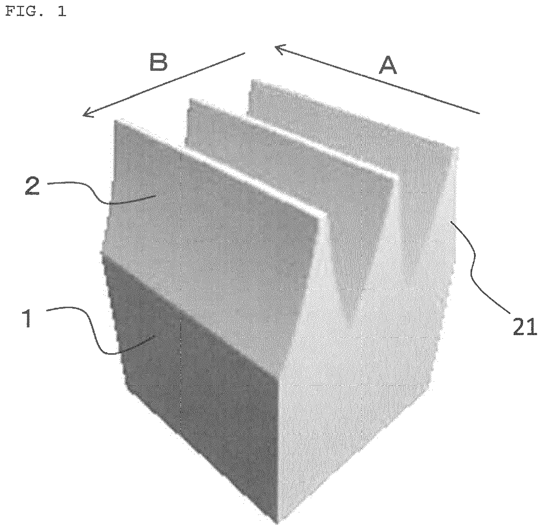

As illustrated in FIG. 1, an optical component according to the present disclosure includes a base 1 that has a function as an optical component, and a reflection suppressing structure 2 which is formed on the surface of the base 1, and which is formed in a line-and-space in a cross-sectional view having a plurality of sequential concavities and convexities defining a predetermined convex shape 21.

In this case, the term optical component means a component that has a light transmissive surface, and example optical components are a lens, a prism, a filter, a mirror, and a display.

The term base 1 means a part that has a predetermined function as the optical component. The shape of the base is not limited to any particular shape, and is designed freely in accordance with the function of the optical member, the application thereof, etc., such as a tabular shape like a display, and a curved surface shape like a lens. The material of the base is also freely selected in accordance with the function of the optical component, and the application thereof, but an optically transparent material within a visible light range from, e.g., 400-780 nm is preferable since such a material is applicable to various optical applications. When the optical component is applied within an ultraviolet range, it is preferable that the optical component should be formed of a material that contains silica glass, sapphire glass, etc., which has a high ultraviolet transmissivity.

The term reflection suppressing structure 2 is a microscopic concavo-convex structure that is capable of suppressing a reflection of light. Light is likely to be reflected at a part where a change in refractive index is large. Conversely, when the concavities and convexities of the reflection suppressing structure 2 are formed at a cycle smaller than the wavelength of the visible light range, it is known that light behaves as if an average refractive index between the refractive index of the medium at an arbitrary site in the height direction of the concavity and convexity, and the refractive index of the material applied for the reflection suppressing structure 2 is the refractive index at this site. Hence, when the concavities and convexities of the reflection suppressing structure 2 are formed so as to change the average refractive index moderately, a keen refractive index change is eliminated, enabling a suppression of a reflection of incident light.

Note that the term medium means a substance or an object that becomes a place where light is propagated, and is a gas like air in contact with the surface of the optical component (surface of reflection suppressing structure 2) or a liquid like water, but may be vacuum.

An example known concavo-convex structure is a moth-eye structure in a pillar shaper or in a hall shape, but according to the present disclosure, the reflection suppressing structure 2 in a line-and-space shape which is easy to process and which has a relative high rigidity is applied. In this case, upon keen studies by the inventors of the present disclosure, it becomes known that, as for the reflection suppressing structure 2 in a line-and-space shape having multiple sequential concavities and convexities in a cross-sectional view defining a convex shape 21 and vertical to the line direction, when the position of the bottom side of the convex shape 21 is zero, the shortest distance from the bottom side to the reflection suppressing structure 2 is t, the refractive index of the material for the reflection suppressing structure 2 is $n_s$, the average refractive index of the reflection suppressing structure 2 at a position by the distance t from the bottom side is $n_t$, the height from the bottom side is H, and the refractive index of the medium in contact with the surface of the reflection suppressing structure 2 is $n_M$, the closer the refractive index $n_t$ is to the following formula (A), the greater the effect of suppressing a reflection of light from a wide angle becomes.

$$n_t = n_M + \frac{(n_S - n_M)(t - H)^2}{H^2}$$

Formula (A)

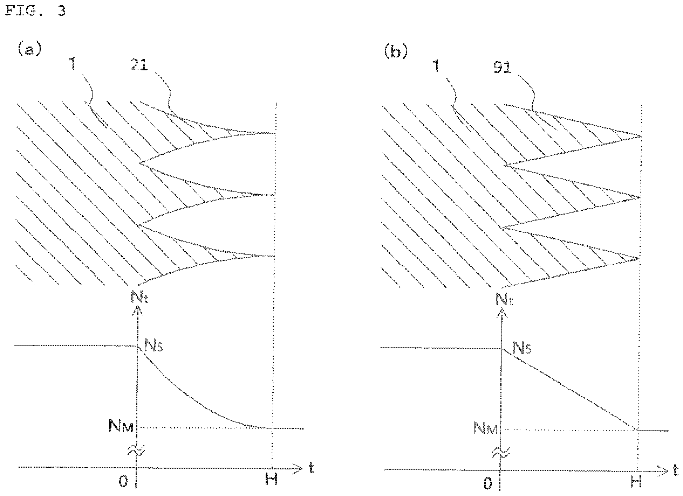

FIG. 3A illustrates this condition. For the purpose of comparison, FIG. 3B illustrates the average refractive index of a conventional reflection suppressing structure 2 that has a cross-section in a triangular line-and-space shape.

The convex shape 21 that satisfies the formula (A) can be expressed by the following formula (B) when the mid-point of the bottom side of the convex shape 21 is located at the origin, the bottom side is a y-axis, the height direction relative to the bottom side is an x-axis, the width of the convex shape 21 (line and space pitch) is P, the height of the convex shape 21 is H, and an arbitrary site on the convex shape 21 is (x, y):

$$-\frac{P}{2}\left(\frac{1}{H}x - 1\right)^2 \leq y \leq \frac{P}{2}\left(\frac{1}{H}x - 1\right)^2$$

Formula (B)

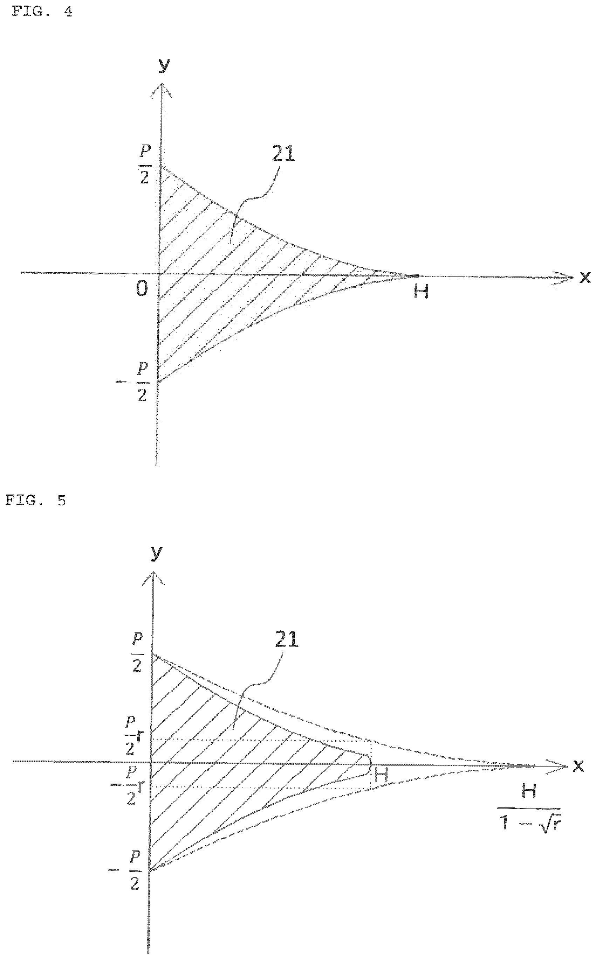

where ($0 \leq x \leq H$). FIG. 4 illustrates this condition.

In addition, it becomes also known that the sufficiently high effect is accomplishable even if the vertex shape of the convex shape 21 is slightly crushed. Hence, when a coefficient indicating such an error is defined as r ($0 \leq r < 1$), and the maximum error range in y at a site of the vertex of the convex shape 21 (site where x = H) is:

$$-\frac{P}{2}r \leq y \leq \frac{P}{2}r$$

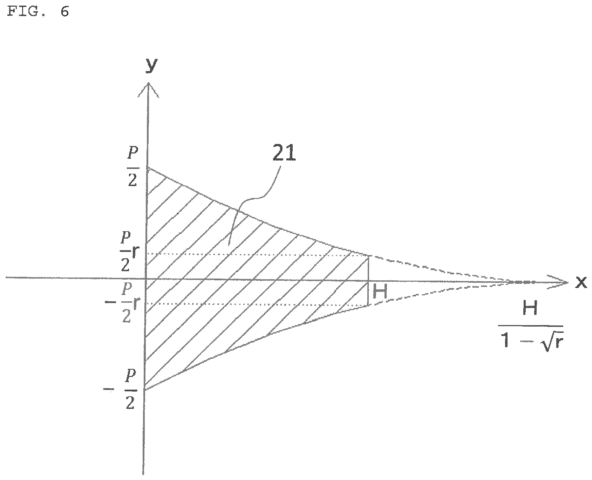

it is appropriate if the convex shape 21 is in a shape that satisfies the following formula (1) ($0 \leq x \leq H$). FIG. 5 or 6 illustrates this condition:

$$-\frac{P}{2}\left(\frac{1-\sqrt{r}}{H}x - 1\right)^2 \leq y \leq \frac{P}{2}\left(\frac{1-\sqrt{r}}{H}x - 1\right)^2$$

Formula (1)

Note that in the formula (1), when r = 0.1 (10 %), reflection is sufficiently suppressed, but it is preferable if r = 0.05 (5 %), and more preferably, r = 0.03 (3 %).

As for the manufacturing method of such a reflection suppressing structure 2, an arbitrary method that is conventionally known is applicable. For example, technologies, such as nano-imprinting, injection molding, and photo-lithography, are applicable.

Next, simulation and comparison were made for optical characteristics of the optical component (first example) that includes the reflection suppressing structure 2 in a line-and-space shape with the convex shape 21 in a cross-sectional view satisfying the formula (1), and those of optical components (first comparative example and second comparative example) that include the reflection suppressing structure 2 in a line-and-space shape with a convex shape 91 in a cross-sectional view not satisfying the formula (1).

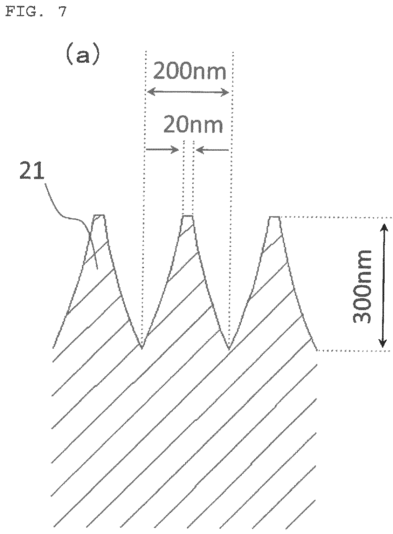

According to the simulation, all of the optical components according to the first example, the first comparative example, and the second comparative example were assumed that the material applied for the base 1 and the reflection suppressing structure 2 had a refractive index of 1.52. In addition, the assumed medium on the surface of the optical component was air that had a refractive index of 1.00. Still further, as illustrated in FIG. 7A, in the first example, the convex shape 21 of the reflection suppressing structure 2 of the optical component was a curved surface including the upper side that had a width of 20 nm, the bottom side that had a width of 200 nm, the height of 300 nm, and the sides that satisfied the following formulae (2), (3):

$$y = \frac{P}{2}\left(\frac{1-\sqrt{r}}{H}x - 1\right)^2$$

Formula (2)

$$y = -\frac{P}{2}\left(\frac{1 - \sqrt{r}}{H}x - 1\right)^{2}$$

<div align="right">Formula (3)</div>

Note that in the formulae (2), (3), definitions were made in such a way that the mid-point of the bottom side of the convex shape 21 is located at the origin, the bottom side is the y-axis, the height direction relative to the bottom side is the x-axis, the length of the bottom side is P = 200 (nm), the height of the convex shape 21 is H = 300 (nm), r = 0.1, and the position on the side of the convex shape 21 is (x, y).

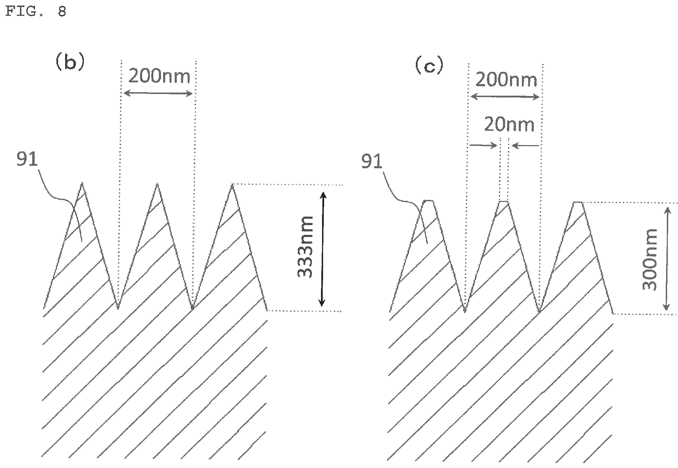

In addition, as illustrated in FIG. 8B, as for the first comparative example, the convex shape 91 of the reflection suppressing structure of the optical component was in a triangular shape including the bottom side that had a width of 200 nm, and a height of 333 nm.

Still further, as illustrated in FIG. 8C, as for the second comparative example, the convex shape 91 of the reflection suppressing structure of the optical component was in a trapezoidal shape including the upper side that had a width of 20 nm, the bottom side that had a width of 200 nm, and a height of 300 nm.

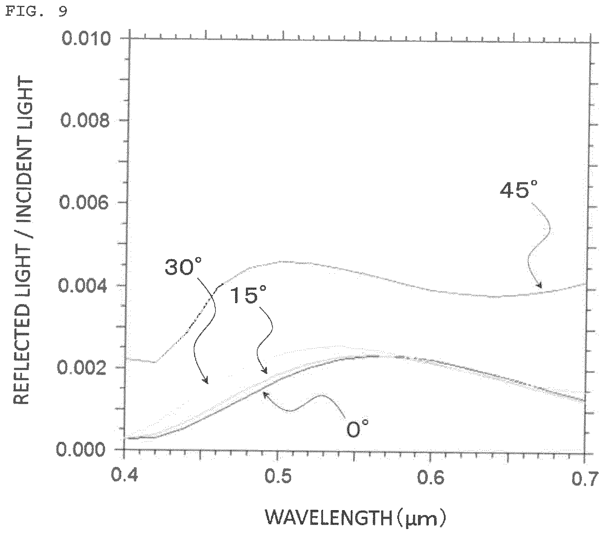

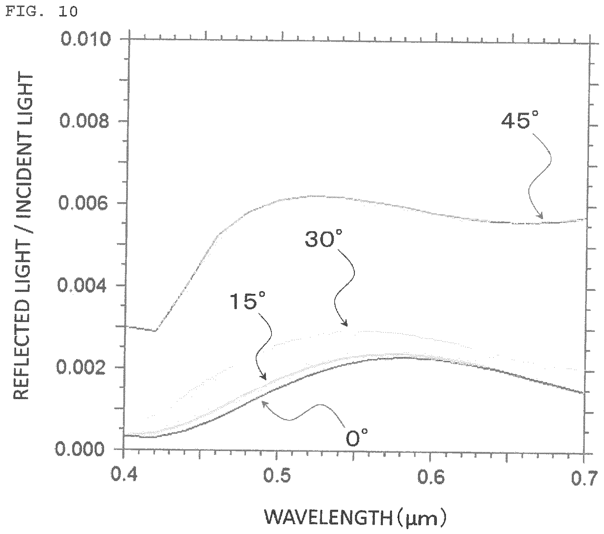

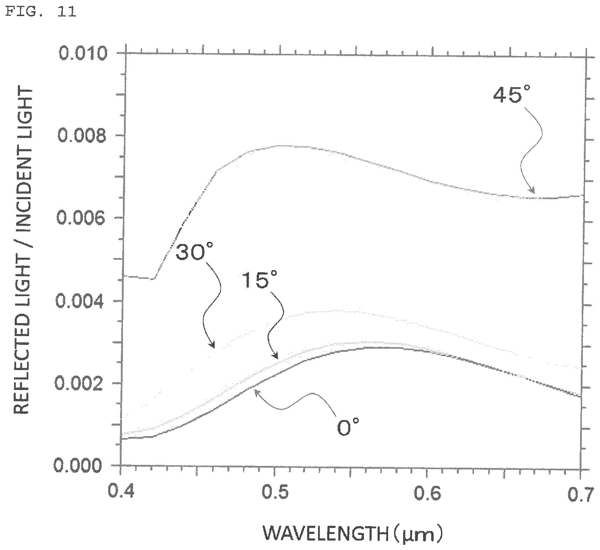

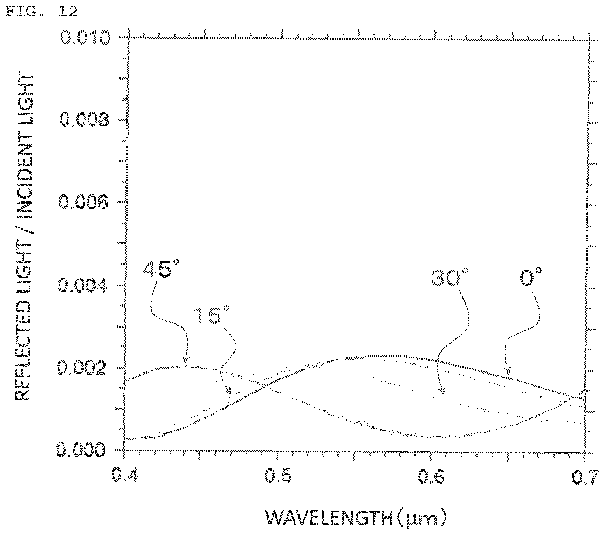

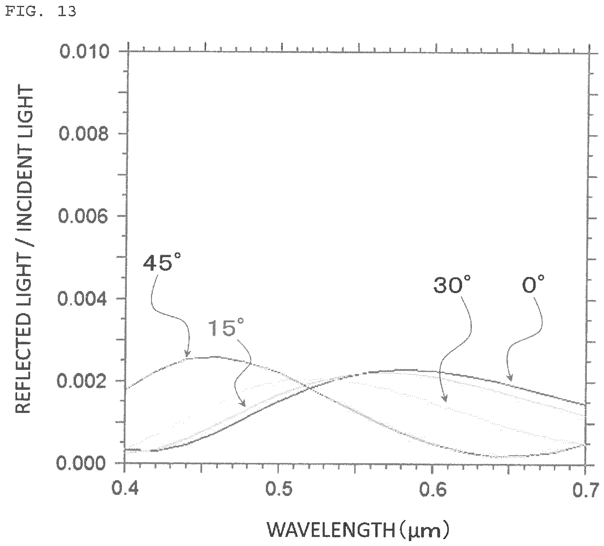

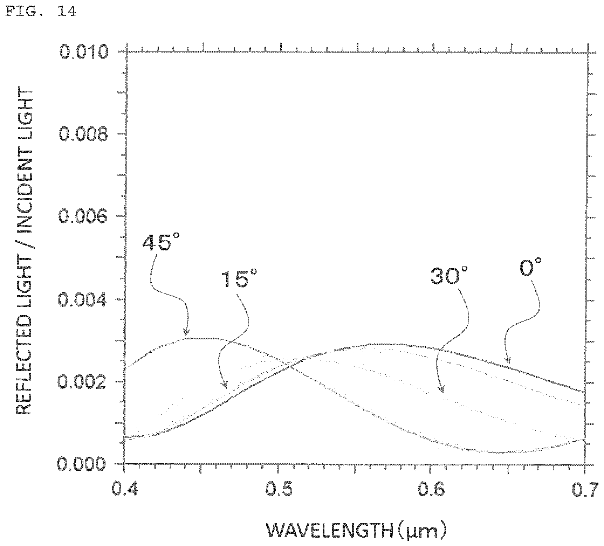

FIGS. 9, 12 illustrate simulation results of the optical characteristics of the optical component (first example) satisfying the formula (1), FIGS. 10, 13 illustrate simulation results of the optical characteristics of the optical component (first comparative example) not satisfying the formula (1), and FIGS. 11, 14 illustrate simulation results of the optical characteristics of the optical component (second comparative example) not satisfying the formula (1). As for the optical characteristics, a calculation was made for a relationship between the wavelength of light and a ratio (reflected light/incident light) of the intensity of reflected light relative to incident light. FIGS. 9-11 illustrate respective calculation results when light was emitted from a light source at incident angles of 0 degree, 15 degrees, 30 degrees, and 45 degrees with the line direction (direction of arrow A in FIG. 1) of the reflection suppressing structure formed on the optical component being as a rotational axis, and a relationship between the intensity of the reflected light and the wavelength in the direction in which the incident angle was 0 degree was calculated. In addition, FIGS. 12-14 illustrate respective calculation results when light was emitted from a light source at incident angles of 0 degree, 15 degrees, 30 degrees, and 45 degrees with a vertical direction (direction of arrow B in FIG. 1) to the line direction of the reflection suppressing structure 2 formed on the optical component being as a rotational axis, and a relationship between the intensity of the reflected light and the wavelength in the direction in which the incident angle was 0 degree was calculated. As for the wavelength, the calculations were made within a range of 400-700 nm that is a visible light range. Note that a software DiffractMOSD available from synopsys, Inc., was applied for the simulation.

As is clear from the results illustrated in FIGS. 9-14, the optical component according to the first example sufficiently suppresses a reflection of light although the incident angle of light changes. In addition, it also becomes clear that, even if the incident angle of light changes with the line direction of the reflection suppressing structure 2 being as a rotation axis, a reflection of light is still sufficiently suppressed.

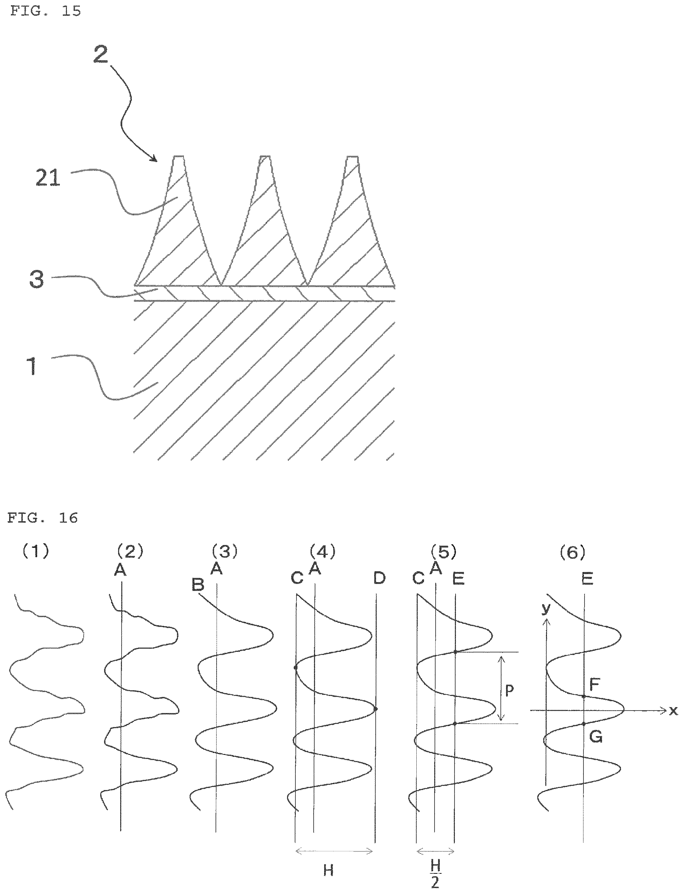

As for the reflection suppressing structure 2, the more the change in refractive index is moderate, the greater the reflection of light from a surface is suppressed. Hence, if the refractive index of the material applied to the reflection suppressing structure 2 is the same refractive index, the higher the height H of the convex shape 21 is, the greater the reflection of light is suppressed. However, accomplishment of an increase in height by only the reflection suppressing structure 2 is difficult due to the restriction in process. Hence, according to the optical component of the present disclosure, as illustrated in FIG. 15, at least one buffer layer 3 formed of a material that has a refractive index lower than that of the base 1 but higher than that of the reflection suppressing structure 2 may be further formed. When equal to or greater than two buffer layers 3 are formed, those buffer layers are disposed in such a way that the buffer layer 3 at the base-1 side has the higher refractive index than that of the buffer layer 3 at the reflection-suppressing-structure-2 side. According to such a structure, a material that has a low refractive index becomes applicable to the reflection suppressing structure 2, and thus a change in refractive index is further reduced. Note that the material for the buffer layer 3 and the material for the reflection suppressing structure 2 are freely selectable, but for example, a material that has an adjusted refractive index by a siloxane-series material is applicable.

As for the method of forming the buffer layer 3 on the base 1, any methods that can cause the base 1 and the buffer layer 3 to be intimately and uniformly in contact with each other are applicable, and for example, a thermosetting material having an adjusted refractive index may be applied by spin coating, and heated to form the buffer layer 3.

Note that in this specification, although the x-axis, the y-axis, the width P of the bottom side of the convex shape, the height H thereof, etc., have been explained, in the actual structure, the convex shape may have a distortion, etc., and is not uniform in a microscopic view. Basically, in fully view of the technical significances of the convex shape, the x-axis, the y-axis, the width P of the bottom side of the convex shape, and the height H thereof, etc. , are defined, but when there is a doubt, the following measurements may be made for definition (see FIG. 16). In this case, also, the technical significances of the convex shape should be fully in consideration.

(1) Pick up a cross-sectional image that traverses the reflection suppressing structure through an orthogonal plane to the line direction of the line and space by a Scanning Electron Microscope (SEM).

(2) In roughly view of a direction in which the concavities and convexities of line and space are arranged side by side, measure a point on the boundary of the concavo-convex structure from the cross-sectional image, and calculate the measured result by a least square scheme to derive an approximate straight line A.

(3) With reference to the approximate straight line A, measure the height of the concavo-convex structure at the boundary in the cross-sectional image, obtain an average of the height at the pitch of 10 nm over the approximate straight line A, and perform smoothing by linear interpolation. Hence, a reference concavo-convex line B that has abnormal defect and distortion eliminated is created.

(4) For the concavity and the convexity on the reference concavo-convex line B across either one side wall of the convex shape, determine a straight line C passing through the minimum value of the height of the reference concave-convex line B with reference to the approximate straight line A, and a straight line D passing through the maximum value of the height. The straight lines C, D are parallel lines to the approximate straight line A. Set the gap between the straight line C and the straight line D as the height H of the concavo-convex structure. In addition, set the straight line C as the y-axis.

(5) Determine a straight line E which is a parallel line to the approximate straight line A, and which passes through the center between the straight line C and the straight line D. In addition, with an intersection of the straight line E to the side wall in (4) being as a center, set a width by what corresponds to a pitch as the width P of the bottom side of the convex shape.

(6) When intersections of the straight line E to the convex shape in (4) are F, G, set the x-axis that is a straight line which passes through the center between the intersections F and G, and which is orthogonal to the straight line E.

REFERENCE SIGNS LIST

| 1 | Base |
| 2 | Reflection suppressing structure |
| 3 | Buffer layer |
| 21 | Convex shape |
| 91 | Convex shape |

**Claims**

1. An optical component comprising:

a base having a function as an optical component; and
a reflection suppressing structure in a line-and-space shape which is formed on a surface of the base, and which comprises a plurality of sequential concavities and convexities defining a convex shape in a cross-sectional view,
wherein when a position of a mid-point of a bottom side of the convex shape is an origin, the bottom side is y-axis, a height direction relative to the bottom side is x-axis, a width of the bottom side of the convex shape is P, a height of the convex shape is H, r = 0.1, and an arbitrary position on the convex shape is (x, y), the convex shape satisfies a following formula (1) :

$$-\frac{P}{2}\left(\frac{1-\sqrt{r}}{H}x-1\right)^2 \leqq y \leqq \frac{P}{2}\left(\frac{1-\sqrt{r}}{H}x-1\right)^2$$

Formula (1)

2. The optical component according to claim 1, further comprising at least one buffer layer which is formed between the base and the reflection suppressing structure, and which is formed of a material that has a reflective index lower than a reflective index of the base but higher than a reflective index of a material for the reflection suppressing structure.

3. A method of manufacturing an optical component comprising:

   a base having a function as an optical component; and
   a reflection suppressing structure in a line-and-space shape which is formed on a surface of the base, and which comprises a plurality of sequential concavities and convexities defining a convex shape in a cross-sectional view,
   wherein when a position of a mid-point of a bottom side of the convex shape is an origin, the bottom side is y-axis, a height direction relative to the bottom side is x-axis, a width of the bottom side of the convex shape is P, a height of the convex shape is H, r = 0.1, and an arbitrary position on the convex shape is (x, y), the method adjusts the convex shape so as to satisfy a following formula (1):

$$-\frac{P}{2}\left(\frac{1-\sqrt{r}}{H}x - 1\right)^2 \leqq y \leqq \frac{P}{2}\left(\frac{1-\sqrt{r}}{H}x - 1\right)^2$$

Formula (1)

4. The optical-component manufacturing method according to claim 3, further comprising forming at least one buffer layer which is formed between the base and the reflection suppressing structure, and which is formed of a material that has a reflective index lower than a reflective index of the base but higher than a reflective index of a material for the reflection suppressing structure.

FIG. 1

FIG. 2

FIG. 3

(a)

(b)

FIG. 4

FIG. 5

FIG. 6

FIG. 7

(a)

FIG. 8

(b)

91

200nm

333nm

(c)

91

200nm

20nm

300nm

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| PCT/JP2015/074103 |

A. CLASSIFICATION OF SUBJECT MATTER

*G02B1/118*(2015.01)i

According to International Patent Classification (IPC) or to both national classification and IPC

B. FIELDS SEARCHED

Minimum documentation searched (classification system followed by classification symbols)
G02B1/118

Documentation searched other than minimum documentation to the extent that such documents are included in the fields searched

Jitsuyo Shinan Koho      1922–1996    Jitsuyo Shinan Toroku Koho    1996–2015
Kokai Jitsuyo Shinan Koho   1971–2015    Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-240904 A  (Dainippon Printing Co.,<br>Ltd.),<br>27 August 2003 (27.08.2003),<br>paragraphs [0045], [0048], [0052]; fig. 7(A)<br>& US 2005/0074579 A1<br>paragraphs [0076], [0081], [0087]; fig. 7(A) | 1,3<br>2,4 |
| Y | JP 2009-31764 A  (Mitsubishi Rayon Co., Ltd.),<br>12 February 2009 (12.02.2009),<br>paragraph [0075]<br>(Family: none) | 2,4 |

☐   Further documents are listed in the continuation of Box C.      ☐   See patent family annex.

| | |
| --- | --- |
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>     09 November 2015 (09.11.15) | Date of mailing of the international search report<br>     24 November 2015 (24.11.15) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**EP 3 130 946 A1**

## REFERENCES CITED IN THE DESCRIPTION

### Patent documents cited in the description

- JP 2014051601 A
- JP 3368225 B